(19) **Europäisches Patentamt**

**European Patent Office**

**Office européen des brevets**

(11) **EP 1 005 211 A2**

(12) **EUROPÄISCHE PATENTANMELDUNG**

(43) Veröffentlichungstag:
31.05.2000 Patentblatt 2000/22

(51) Int. Cl.[7]: **H04M 1/60**

(21) Anmeldenummer: **99120503.0**

(22) Anmeldetag: **15.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.11.1998 DE 19855037**

(71) Anmelder: **MOTOROLA, INC.**
**Schaumburg, IL 60196 (US)**

(72) Erfinder:
- **Martschink, Volker**
  **65195 Wiesbaden (DE)**
- **Pai, Klaus**
  **65329 Hohenstein (DE)**

(74) Vertreter:
**Richardt, Markus Albert**
**Motorola GmbH,**
**Intellectual Property Dept.,**
**Hagenauerstrasse 47**
**65203 Wiesbaden (DE)**

(54) **Kommunikationsgerät mit Wahl der Betriebsart in Abhängigkeit von dessen Lage zu einem unabhängigen Bezugssystem**

(57) In einem Kommunikationsgerät (100) mit Hörer (110) und Mikrofon (120) befindet sich ein Sensor (130), der eine erste Verbindungslinie (105) von Hörer (110) zu Mikrofon (120) auf ein geräte- und personenunabhängiges System (200, 230) wie z.B. das Gravitationsfeld der Erde bezieht und dadurch die Betriebsart LEISE (1) oder LAUT (2) des Kommunikationsgerätes (100) auswählt. Wenn der Winkel (230) zwischen Verbindungslinie (105) und Lotlinie (205) des Gravitations- feldes im wesentlichen dem Winkel (330) einer zweiten Verbindungslinie zwischen Ohr (310) und Mund (320) einer zur Kommunikation bevollmächtigten Person (300) entspricht, schaltet der Sensor (130) das Kommunikationsgerät (100) auf LEISE, um damit weiteren Personen (400) in der Nachbarschaft (X2) das Zuhören vom Hörer (110) aus zu verweigern.

FIG. 1

**Beschreibung**

Gebiet der Erfindung

Die vorliegende Erfindung betrifft Kommunikationsgeräte im allgemeinen, und tragbare Geräte mit elektroakustischem Wandler im besonderen.

Hintergrund der Erfindung

Bei einem Gespräch zwischen zwei Partnern A und C über ein Kommunikationssystem (z.B. Telefon, Funk) müssen beide Partner A und C in der Lage sein, sich gegenseitig akustisch zu verstehen. Es gibt Gesprächssituationen, in denen sich eine weitere Person B in unmittelbarer Nähe zu A aufhält.

In einem ersten Fall wird B zumindest teilweise von der Unterhaltung ausgeschlossen, wenn C über Angelegenheiten spricht, die nur für A aber nicht für B bestimmt sind. B hört zwar A, sollte C aber nicht hören. In einem zweiten Fall wird B als Partner gezielt in das Gespräch einbezogen und hört sowohl A als auch C.

Das Systemendgerät auf der Seite der Personen A und B wird (i) im ersten Fall im Modus LEISE betrieben (Hörer mit geringer Lautstärke am Ohr von A), und (ii) im zweiten Fall LAUT betrieben (große Lautstärke, hörbar für A und B).

Aus der EP 0564 160 B1 (Bowen et al., deutsche Übersetzung DE 693 18 613 T2) ist ein tragbares persönliches Kommunikationsgerät bekannt, das sowohl in einer Hörerbetriebsart mit Ohrkopplung als auch in einer Freiraum-Lautsprecher- oder Lauthörfernsprecher-Betriebsart wirkt und automatisch auf der Grundlage einer kontinuierlichen Abstandsmessung zwischen Hörer-Audio-Ausgabevorrichtung und dem Ohr des Benutzers zwischen den beiden Betriebsarten wechselt. Diese Schrift gibt auch eine weitere Begründung für die Notwendigkeit der beiden Betriebsarten.

Aus der JP 9162772 A (Suzuki et al.) ist ein tragbares Funkgerät bekannt, bei dem während des Betriebs ein Infrarotsensor die Entfernung zwischen Benutzer und Funkgerät bestimmt und dieser Entfernung entsprechend die Lautstärke im Hörer einstellt. Die Einstellung der Lautstärke dient beispielsweise dem Schutz des Benutzers vor Überlautstärke.

Das Umschalten zwischen den Betriebsarten wird durch die Entfernung Kopf-Gerät und damit den Raum dazwischen definiert. Umwelteinflüsse (z.B. sich ändernde dielektrische Konstanten, weitere Infrarotquellen) könnten das Umschalten beeinflussen.

Es stellt sich somit als Aufgabe der Erfindung, ein Kommunikationsgerät so zu konstruieren, daß dieses den genannten Nachteil vermeidet. Diese Aufgabe wird bei einer gattungsgemäßen Einrichtung und einem Verfahren nach den Ansprüchen gelöst.

Kurzbeschreibung der Zeichnungen

FIG. 1     zeigt in vereinfachter Darstellung ein Kommunikationsgerät entsprechend der vorliegenden Erfindung in einem Bezugssystem; Benutzer A und B des Kommunikationsgerätes; und vereinfachte Diagramme der auftretenden Schallpegel; und

FIG. 2     zeigt in vereinfachter Darstellung ein Blockdiagramm des Kommunikationsgerätes nach FIG. 1 in einem bevorzugten Ausführungsbeispiel der vorliegenden Erfindung.

Ausführliche Beschreibung der Zeichnungen

Die vorliegende Erfindung beschreibt ein Doppelbetriebsart-Gerät ("Dual Mode"), bei dem das Umschalten zwischen den Betriebsarten automatisch in Bezug zu einem Bezugssystem (z.B. Gravitationsfeld der Erde mit Lot-Gradienten) erfolgt, das unabhängig vom Nutzer und vom Gerät selbst ist.

Im Vergleich zum Stand der Technik, bei dem das Umschalten durch die Entfernung und damit den Raum zwischen Benutzer und Gerät definiert wird, braucht die vorliegende Erfindung Umwelteinflüsse im Raum nicht zu berücksichtigen, da das Bezugssystem sowohl auf Gerät als auch auf Benutzer gleich wirkt.

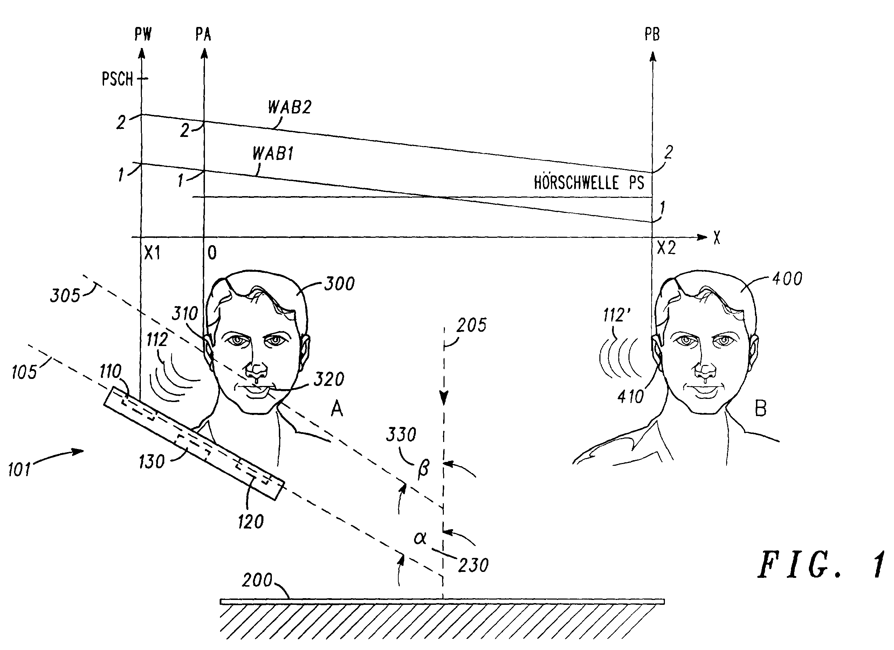

FIG. 1 zeigt in vereinfachter Darstellung Kommunikationsgerät 100 entsprechend der vorliegenden Erfindung in Bezugssystem 200/205; Benutzer A (300) und B (400) des Kommunikationsgerätes; und vereinfachte Diagramme der auftretenden Schallpegel P (PW, PA, PB).

Kommunikationsgerät 100 (im weiteren "Gerät 100") umfaßt elektroakustischen Wandler 110 (z.B. Hörer oder Lautsprecher), Lagesensor 130 (auch "Positionssensor" oder "Lotsensor") und, wahlweise, akustoelektrischen Wandler 120 (z.B. Mikrofon). Verbindungslinie 105 (gestrichelt) zwischen Wandler 110 und Mikrofon 120 ist ein Beispiel für die räumliche Ausdehnung des Gerätes 100. Person A kann Gerät 100 in der Hand halten. Das ist aber nicht notwendig. Die in FIG. 1 dargestellte Position des Gerätes 100 (damit auch Linie 105) in der Nähe des Kopfes der Person auf der linken Seite ist nur ein Beispiel und nicht darauf beschränkt. Vielmehr kann sich Gerät 100 in anderen Positionen in oder außerhalb eines von den Personen mit der Hand zugänglichen Bereiches befinden.

Wandler 110 sendet Informationen als akustisches Signal 112 zu einer ersten Person A (300) und, zeitweilig, zu einer zweiten Person B (400). Signal 112 trifft bei Person 400 abgeschwächt ein (112'). Zum Verständnis der Erfindung wird davon ausgegangen, daß die Information von einer hier nicht dargestellten Person C bzw. von einem Sprachcomputer bereitgestellt wird, die mit Gerät 100 kommuniziert (z.B. über Funk oder Telefonleitung, z.B. mit Informationssignal 101). Die Kommunikation von Personen A und B an C ist nicht Gegenstand der vorliegenden Erfindung und wird deshalb nicht weiter in Betracht gezogen. Bezogen auf eine X-Achse befinden sich das Ohr (310) der Person A an Position X=0 und das Ohr (410) der Person B an Position X=X2 . Wandler 110 wird als Punktschallquelle an Position X1 betrachtet. Mit anderen Worten, der Abstand von Wandler 110 zum Ohr der Person A beträgt X1 (z.B. 0 bis einige Zentimeter), der Abstand zum Ohr der Person B beträgt X2 + X1 (X2 >> X1, bis einige Meter). Abstand X1 kann im weiteren vernachlässigt werden ("unmittelbare Nähe"), wogegen der Abstand X2 zwischen den beiden Personen A und B als vorherbestimmt angesehen wird.

FIG. 1 zeigt Bezugssystem 200/205 beispielsweise als das Gravitationsfeld ("Schwerefeld") der Erde. Gravitationsgradient 205 (auch "Lotlinie") ist in FIG. 1 durch einen nach unten weisenden gestrichelten Pfeil dargestellt. Gradient 205 entspricht der gerichteten Erdanziehungskraft **G** (vgl. Vektor des Gravitationskoeffizienten **g** multipliziert mit der Masse m eines Gegenstandes). In vereinfachter Darstellung ist Erdoberfläche 200 als horizontale Ebene dargestellt (senkrecht zu 205), was aber nicht notwendig für die Erfindung ist. Weitere Bezugsysteme werden später angeführt.

Verbindungslinie 305 zwischen Ohr (310) und Mund (320) der Person A bildet einen im wesentlichen konstanten Winkel β (330) zur Lotlinie 205 (Lotwinkel). Für die folgende Erläuterung der vorliegenden Erfindung wird davon ausgegangen, daß sich der Kopf der Person A in aufrechter Lage befindet (Person A sitzt oder steht). Das ist jedoch für die vorliegende Erfindung nicht notwendig. Winkel β könnte z.B. auch für liegende Personen definiert werden.

Selbst wenn Person A ihren Kopf nach links oder rechts drehen würde, bliebe Lotwinkel β im wesentlichen unverändert. Unter Einbeziehung eines Toleranzwinkels γ wird eine Winkelmenge { β } festgelegt, die alle Winkel im Bereich von $(\beta-\gamma) \approx 30°$ bis $(\beta+\gamma) \approx 60°$ umfaßt:

$$\{ \beta \} = (\beta-\gamma) ... (\beta+\gamma) \qquad (1)$$

Die angegebenen Zahlenwerte beziehen sich auf das Beispiel und können variiert werden.

Wie eingangs erwähnt, kann Verbindungslinie 105 (z.B. Wandler/Mikrofon) jede Lage einnehmen. Linie 105 bildet einen Lotwinkel α zu Gradient 205 ($0° \leq \alpha \leq 90°$). Entsprechend einem Verfahren der vorliegenden Erfindung bestimmt Sensor 130 den Winkel α, vergleicht α mit { β } und schaltet Gerät 100 zwischen mindestens zwei Betriebsarten je nach Vergleichsergebnis.

Die erste Betriebsart "LEISE" (1) dient vor allem zum Übermitteln von vertraulichen Informationen (von C) an bevollmächtigte Person A (z.B. C: "Ihr Kontostand beträgt ...") wobei Person B das Zuhören (von Wandler 110 aus) verweigert werden soll. Sensor 130 schaltet Gerät 100 in die Betriebsart LEISE wenn sich Gerät 100 hinsichtlich des Bezugssystems 200/205 in einer solchen Lage befindet, in der $(\beta-\gamma) \leq \alpha \leq (\beta+\gamma)$ gilt. Die vorliegende Erfindung nutzt die Tatsache, daß telefonierende Personen (hier: A) in der Betriebsart LEISE den Handapparat (hier: Gerät 100) im wesentlichen in einem vorherbestimmten Winkel ($\alpha \in$ { β }, "∈" für "Element von") halten. Mit anderen Worten, wenn sich Gerät 100 in einer solchen Lage befindet, die der entspricht, mit der die Person A Gerät 100 am Ohr (310) halten würde ($\beta \pm \gamma$), geht Gerät 100 in den LEISE-Modus.

Es ist dabei nicht notwendig, daß Person A das Gerät 100 auch wirklich am Ohr (310) halten muß. Es reicht vielmehr aus, das Gerät 100 in eine entsprechende Lage zum Bezugssystem zu versetzen.

Die zweite Betriebsart "LAUT" (2) dient zum Übermitteln von Informationen sowohl an A als auch an B (z.B. C: "Für die Nordsee wurde Sturmwarnung gegeben ..."). Wenn Winkel α nicht in die vorherbestimmte Winkelmenge paßt ($\alpha \notin$ { β }), schaltet Gerät 100 auf die zweite Betriebsart LAUT um.

Zur genauen Unterscheidung beider Betriebsarten lassen sich die ebenfalls in FIG. 1 gezeigten vereinfachten Diagramme der auftretenden Schallpegel heranziehen. Der Begriff "Schallpegel" steht hier stellvertretend für "Schall-Druckpegel", "Schall-Leistungspegel", oder andere Maße für die vorhandene akustische Energie. Unter Verwendung von Index "1" für "LEISE" und Index "2" für "LAUT" zeigen die Diagramme den von Wandler 110 (bei X=X1 ) erzeugten Schallpegel "PX", den von Person A (bei X=0) empfangenen Schallpegel "PA", sowie den von Person B (bei X=X2 ) empfangenen Schallpegel "PB". Linien WAB1 und WAB2 zwischen den Diagrammen zeigen die Pegelabnahme mit zunehmender Entfernung (Wandler, Person A, Person B) . Die grob vereinfachten Diagramme dienen nur zur qualitativen (größer, kleiner, gleich) Darstellung der Größenrelationen und nehmen keine Rücksicht auf tatsächliche Pegelverhältnisse, Maßstäbe oder die quadratische Form der Schallpegelfunktionen.

"DA" sei die Luftdämpfung über Entfernung X1 (Wandler 110 zu Person A). "DB" sei die Luftdämpfung über Entfernung X1+X2 (Wandler 110 zu Person B), die sich in einer vorherbestimmten Mindestentfernung X2 zu Person A aufhält. "PSA" sei die Hörschwelle der Person A. "PSB" sei die Hörschwelle der Person B, wobei üblicherweise PSA=PSB=PS angenommen werden kann. Für die Betriebsart LEISE gilt:

•

$$\alpha \in \{ \beta \} \qquad (2)$$

•    PW / DA ≥ PSA (A kann hören, "/" für Division)
•    PW*DB < PSB (B kann nicht hören)

Linie WAB1 kreuzt PS.

Für die Betriebsart LAUT gilt:

•

$$\alpha \notin \{ \beta \} \qquad (3)$$

• PW / DA $\geq$ PSA (A kann hören)
• PW*DB $\geq$ PSB (B kann ebenfalls hören)

Die Hörschwelle PS kann definiert werden als absolute Hörschwelle bzw. als relative Hörschwelle in Bezug zu auftretenden Nebengeräuschen. Je nach Lautstärke des Wandlersignals und den Umgebungsgeräuschen werden die Signale verstanden oder nicht.

Üblicherweise kann die Luftdämpfung PSA mit 1 (bzw. 0 dB) angenommen werden (Wandler 110 am Ohr der Person A). Es ist vorteilhaft, wenn Schallpegel LX von vornherein auf einen Wert unterhalb der Schmerzgrenze (PSCH) begrenzt wird (PX < PSCH). Pegelbegrenzer sind Stand der Technik und werden hier nicht weiter erläutert.

Kommunikationsgerät 100 kann z.B. ein Funkgerät oder ein Mobiltelefon sein. In einer typischen Anwendung, die aber keineswegs hierauf beschränkt ist, führt Person A Gerät 100 zum Ohr (oder in eine Parallelposition) und kann - ohne dafür Bedienelemente betätigen zu müssen - LEISE telefonieren.

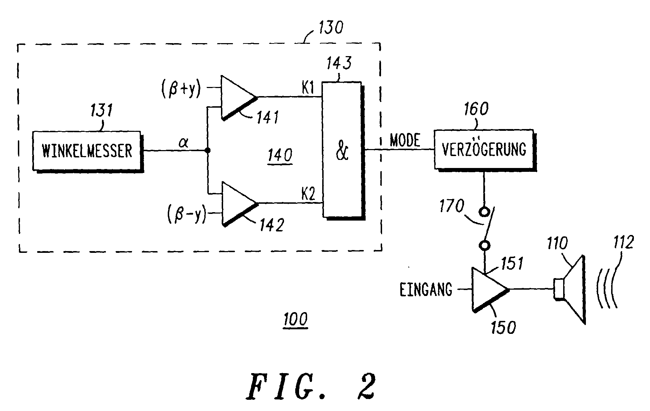

FIG. 2 zeigt in vereinfachter Darstellung ein Blockdiagramm des Kommunikationsgerätes 100 nach FIG. 1 in einem bevorzugten Ausführungsbeispiel der vorliegenden Erfindung. Gerät 100 ist dargestellt mit Sensor 130 (gestrichelter Rahmen), Wandler 110 (Lautsprechersymbol), sowie steuerbarem Verstärker 150 und wahlweisem Verzögerungsglied 160. Sensor 130 umfaßt Winkelmesser 131, Komparatoren 141 und 142, und *AND*-Gatter 143.

Winkelmesser 131 mißt Winkel $\alpha$ und leitet ein $\alpha$ repräsentierendes Signal an Komparatoren 141 und 142 weiter. Komparator 141 prüft $\alpha$ hinsichtlich eines oberen Grenzwertes ($\beta + \gamma$) und stellt das digitale Signal K1 zur Verfügung:

$$K1 = TRUE \text{ für } \alpha \leq ( \beta + \gamma ) \qquad (4)$$

$$K1 = FALSE \text{ für } \alpha > ( \beta + \gamma ) \qquad (5)$$

Ähnlich prüft Komparator 142 $\alpha$ hinsichtlich eines unteren Grenzwertes ($\beta - \gamma$) und stellt das digitale Signal K2 zur Verfügung:

$$K2 = TRUE \text{ für } \alpha \geq ( \beta - \gamma ) \qquad (6)$$

$$K2 = FALSE \text{ für } \alpha < ( \beta - \gamma ) \qquad (7)$$

*AND*-Gatter 143 verknüpft K1 und K2 und stellt das digitale Signal MODE zur Verfügung:

$$MODE = K1 \; AND \; K2 \qquad (8)$$

$$MODE = TRUE \text{ für } ( \beta - \gamma ) \leq \alpha \leq ( \beta + \gamma ) \qquad (9)$$

$$MODE = FALSE \text{ für die anderen Fälle} \qquad (10)$$

MODE = TRUE steht für "LEISE", und MODE = FALSE steht für "LAUT". Sensor 130 leitet MODE an Steuereingang 151 des Verstärkers 150, der ein Eingangssignal EINGANG (z.B. Sprache von C) so verstärkt an Wandler 110 (akustisches Signal 112) abgibt, daß für MODE = TRUE der Schallpegel PX = PX1 und für MODE = FALSE der Pegel PX = PX2 > PX1 beträgt.

Verzögerungsglied 160 kann vorgesehen werden, um einem abrupten Übergang z.B. von LEISE zu LAUT (und umgekehrt) vorzubeugen. Beispielsweise kann Verzögerungsglied 160 das Signal MODE = FALSE erst nach einer Zeit, die ausreichend ist, um den Wandler 110 vom Ohr zu nehmen, an Verstärker 150 weiterleiten.

Schalter 170 symbolisiert die Möglichkeit einer manuellen Einstellung der Betriebsarten. In einer ersten Einstellung (MODE = TRUE) befindet sich Gerät 100 dauerhaft in der Betriebsart LEISE, in einer zweiten Einstellung (MODE = TRUE) befindet sich Gerät 100 in der Betriebsart LAUT, und in einer dritten Einstellung wird die Betriebsart erfindungsgemäß von Sensor 130 bestimmt.

Lagesensoren sind dem Fachmann geläufig. Zum Beispiel kann ein an sich bekanntes mikromechanisches Sensorelement mit Feder-Masse-System aus Silizium und digitaler Auswerteschaltung zur Anwendung kommen.

Der Fachmann wird in der Lage sein, Modifikationen einzuführen, ohne den Bereich der vorliegenden Erfindung zu verlassen. Zum Beispiel können steuerbarer Verstärker 150 und Wandler 110 durch eine Anordnung von selektiv (MODE) angesteuertem Telefonhörer ("LEISE") und Lautsprecher ("LAUT") ersetzt werden. Die Darstellung von Sensor 130 als elektrisches Schaltbild dient nur der Erklärung und ist nicht darauf beschränkt. Sensor 130 kann beispielsweise mechanisch so ausgeführt werden, daß dieser das Signal MODE ohne weitere elektrische Beschaltung bereitstellt.

Die Winkelmenge { $\beta$ } ist wahlweise entsprechend den bevorzugten Telefoniergewohnheiten der Person A einstellbar. Beim Einschalten des Gerätes 100 bzw. bei Standardsituationen während des Betriebes (z.B. Reset, Aufbauen einer Gesprächsverbindung) kann eine bevorzugte Betriebsart (Default-LEISE oder Default-LAUT) festgelegt werden. Oder, Betriebsart LAUT wird für beispielsweise $\alpha \approx 90°$ (senkrecht) beschränkt. Obwohl nur mit den beiden Betriebsarten LEISE und LAUT beschrieben, können Übergänge wahlweise fließend ausgeführt werden (d.h. ausblenden, einblenden), was den Nutzkomfort eines Gerätes 100 der vorliegenden Erfindung weiter erhöht.

Bei der oben beschriebenen Verwendung des Schwerefeldes als Bezugssystem werden im wesentlichen Zenitwinkel ($\alpha$ und $\beta$) berücksichtigt. In anderen Bezugssystemen (z.B. Erdmagnetfeld, Zeitsignalsender DCF-77, Himmelsrichtung) können aber auch Azimutwinkel berücksichtigt werden. Kombinationen von Zenit- und Azimutwinkeln sind ebenfalls möglich.

Die vorliegende Erfindung wurde in Bezug auf Winkelkoordinaten erläutert, was jedoch den Bereich der Erfindung nicht einschränkt. Andere Koordinaten (z.B. XYZ, Höhe) können ebenfalls herangezogen werden.

Der Fachmann ist in der Lage, Gerät 100 auch mit anderen Mitteln (z.B. Verwendung von Mikroprozessoren) zu implementieren, ohne daß es hier weiterer Erklärungen bedarf.

Die vorliegende Erfindung kann auch als Verfahren zum Betreiben eines Kommunikationsgerätes (z.B. Gerät 100) beschrieben werden. Das Verfahren ist dabei durch die folgenden Verfahrensschritte gekennzeichnet:

(a) Bestimmen der Position 230 des Gerätes 100 in Bezug zu unabhängigem System 200 (unabhängig sowohl von Gerät 100 als auch von dessen Benutzer, der Person A);

(b) Betreiben des Gerätes 100 in der ersten Betriebsart (z.B. LEISE), wenn Position 230 einer vorherbestimmten Positionsmenge 330 entspricht (siehe z.B. Winkel $\alpha$ und $\beta$);

(c) Betreiben des Gerätes 100 in der zweiten Betriebsart, wenn Position 230 der vorherbestimmten Positionsmenge 330 nicht mehr entspricht.

Wie oben beschrieben, kann Gerät 100 in Schritt (b) Informationssignal 101 empfangen und über elektroakustischen Wandler 110 mit einer ersten Lautstärke PW1 weiterleiten, und in Schritt (c) Informationssignal 101 empfangen und über den Wandler 110 (oder über einen anderen Wandler) mit einer zweiten, größeren Lautstärke PW2 weiterleiten. In Schritten (b) und (c) empfängt Gerät 100 dabei bevorzugterweise im wesentlichen das gleiche Informationssignal 101. Mit anderen Worten, in Signal 101 bedarf es keines Steuersignals, mit dem zwischen den Betriebsarten umgeschaltet wird.

Während die vorliegende Erfindung durch bestimmte Strukturen, Geräte und Verfahren beschrieben wurde, wird der Fachmann es schätzen, daß auf der Grundlage der vorliegenden Beschreibung, die nur auf die angeführten Beispiele beschränkt sein soll, der volle Umfang der Erfindung durch nun die folgenden Patentansprüche bestimmt wird.

**Patentansprüche**

1. Kommunikationsgerät (100) mit elektroakustischem Wandler (110) gekennzeichnet durch einen Sensor (130) zum Bestimmen der Geräteposition (230) in Bezug zu einem unabhängigen System (200), wobei das Kommunikationsgerät (100) bei Positionen (230), die einer vorherbestimmten Positionsmenge (330) entsprechen, in einer ersten Betriebsart betrieben wird und andernfalls in einer zweiten Betriebsart betrieben wird.

2. Kommunikationsgerät (100) nach Anspruch 1, wobei bei Positionen (230), die der vorherbestimmten Positionsmenge (330) entsprechen, der Wandler (110) akustische Signale (112) bereitstellt, die nur von einer ersten Person (300), die sich in unmittelbarer Nähe (X1) zum Wandler (110) aufhält verstanden werden.

3. Kommunikationsgerät (100) nach Ansprüchen 1 oder 2, bei dem der Sensor (130) auf das System der Erdgravitationskraft (205) reagiert.

4. Kommunikationsgerät (100) nach Anspruch 1 oder 2, bei dem der Sensor (130) auf das System des Erdmagnetfeldes reagiert.

5. Kommunikationsgerät (100) nach Anspruch 2, wobei

(i) in der ersten Betriebsart, der Wandler (110) die Informationen mit einem solchen Schallpegel (PW1) aussendet, daß die Information die erste Person (300) mit einem Schallpegel (PA1) an oder oberhalb der Hörschwelle erreicht (PA1 $\geq$ PS) und eine zweite Person (400) nur mit einem Schallpegel (PB1) unterhalb der Hörschwelle (PB1 < PS) erreichen kann, und

(ii) einer zweiten Betriebsart, bei der der Wandler (110) die Information mit einem solchen Schallpegel (PW2) aussendet, daß die Information die erste Person (300) mit einem Schallpegel (PA2) an oder oberhalb der Hörschwelle (PA2 $\geq$ PS) erreicht und die zweite Person (400) auch mit einem Schallpegel (PB2) an oder oberhalb der Hörschwelle (PB2 $\geq$ PS) erreichen kann,

wobei der Sensor (130) das Kommunikationsgerät (100) in die erste Betriebsart schaltet, wenn sich das Kommunikationsgerät (100) hinsichtlich eines vom Kommunikationsgerät (100) unabhängigen Bezugssystems (200) in einer solchen Lage ( $(\beta-\gamma) \leq \alpha \leq (\beta+\gamma)$ ) befindet, die der entspricht, mit der die erste Person (300) das Kommunikationsgerät (100) am Ohr (310) halten würde ($\beta \pm \gamma$), oder andernfalls in

die zweite Betriebsart schaltet.

6. Kommunikationsgerät (100) nach Anspruch 5, bei dem das Umschalten von (i) nach (ii) verzögert wird.

7. Kommunikationsgerät nach Anspruch 1, wobei bei Positionen (230), die der vorherbestimmten Positionsmenge (330) nicht entsprechen, der Wandler (110) akustische Signale (112) bereitstellt, die sowohl von der ersten Person (300) als auch von einer zweiten Person (400) verstanden werden.

8. Kommunikationsgerät nach Anspruch 7, wobei das Umschalten in die Betriebsart, bei der die zweite Person die akustischen Signale (112) verstehen kann, ein Warnton zumindest an die erste Person (300) abgegeben wird.

9. Kommunikationsgerät nach einem oder mehreren der vorigen Ansprüche, mit Mikrofon (120), bei dem die vorherbestimmte Positionsmenge dem Lotwinkel (330) entspricht, mit der das Kommunikationsgerät (100) von der ersten Person (300) gehalten wird, die das Mikrofon (120) an den Mund (320) und den Wandler (110) an ein Ohr (310) führt.

10. Kommunikationsgerät (100) nach einem oder mehreren der vorigen Ansprüche, bei dem die vorherbestimmte Positionsmenge durch einen Winkel im Bereich von 30 Grad zu 60 Grad zum Lotwinkel bestimmt wird.

11. Kommunikationsgerät (100) nach einem oder mehreren der vorigen Ansprüche, bei dem die Funktion des Sensors (130) wahlweise durch einen manuellen Schalter (170) außer Kraft gesetzt werden kann.

12. Kommunikationsgerät (100) nach einem oder mehreren der vorigen Ansprüche, bei dem der Sensor (130) auf Zenit- bzw. Azimutwinkel oder deren Kombinationen reagiert.

13. Verfahren zum Betreiben eines Kommunikationsgerätes (100), das Verfahren gekennzeichnet durch die folgenden Verfahrensschritte:

(a) Bestimmen der Position (230) des Kommunikationsgerätes (100) in Bezug zu einem unabhängigen System (200);
(b) Betreiben des Kommunikationsgerätes (100) in einer ersten Betriebsart, wenn die Position (230) einer vorherbestimmten Positionsmenge (330) enspricht; und
(c) Betreiben des Kommunikationsgerätes (100) in einer zweiten Betriebsart, wenn die Position (230) der vorherbestimmten Positionsmenge (330) nicht mehr entspricht.

14. Verfahren nach Anspruch 13 zum Betreiben eines Kommunikationsgerätes (100), wobei

in Schritt (b) das Kommunikationsgerät (100) ein Informationssignal (101) empfängt und über einen elektroakustischen Wandler (110) mit einer ersten Lauständer weiterleitet, und
in Schritt (c) das Kommunikationsgerät (100) im wesentlichen das gleiche Informationssignal (101) empfängt und über den gleichen elektroakustischen Wandler (110) oder über einen anderen Wandler mit einer zweiten, größeren Lautstärke weiterleitet.

15. Funkgerät (100) mit Hörer (110) in den Betriebsarten LAUT und LEISE, sowie Mikrofon (120), gekennzeichnet durch einen Lagesensor (130), der je nach Winkel (230) der Verbindungslinie (105) zwischen Hörer (110) und Mikrofon (120) zum Erdgravitationsfeldgradienten (230) den Hörer (110) auf eine der beiden Betriebsarten (LAUT, LEISE) festlegt.

16. Funkgerät (100) nach Anspruch 15, bei dem der Lagesensor (130) die Betriebsart LAUT festlegt, wenn die Verbindungslinie (105) im wesentlichen mit dem Erdgravitationsfeldgradienten (230) übereinstimmt.

17. Funkgerät (100) nach Anspruch 15 mit Verzögerungsglied (160) zwischen Lagesensor (130) und Hörer (110), das ein Umschalten von LEISE auf LAUT erst dann bewirkt, wenn vom Erreichen des entsprechenden Winkels (230) eine vorherbestimmte Zeit vergangen ist.

18. Gerät (100) mit Wandler (110), der ein akustisches Informationssignal (112) mit Pegel PW bereitstellt, gekennzeichnet durch ein mit dem Wandler (110) gekoppelten Lotsensor (130) zum Bestimmen des Lotwinkels $\alpha$ von Gerät (100) zum Schwerefeld (205), wobei mit

DA : Luftdämpfung über Entfernung Wandler zu Person A (300), die den Wandler in der Hand hält,
DB : Luftdämpfung über Entfernung Wandler zu Person B, die sich in einer vorherbestimmten Mindestentfernung (250) zu Person A aufhält,
PSA : Hörschwelle Person A,
PSB : Hörschwelle Person B,
{ $\beta$ }: vorbestimmte Winkelmenge (330) in Bezug zum Schwerefeld (205),

<u>im Fall 1</u>, $\alpha \in \{ \beta \}$: PW / DA $\geq$ PSA und PW*DB < PSB, sowie

im Fall 2, $\alpha \notin \{\beta\}$: PW / DA $\geq$ PSA und PW*DB $\geq$ PSB gilt.

19. Gerät (100) mit Wandler (110) nach Anspruch 18, der so ausgelegt ist, das Person A (300) den Wandler (110) direkt am Ohr (310) halten kann, so daß Luftdämpfung PSA im wesentlichen PSA = 1 (0 dB) beträgt.

20. Gerät (100) mit Wandler (110) nach Anspruch 18, bei der PW unterhalb der Schmerzgrenze PSCH liegt.

21. Tragbares Kommunikationsgerät (100) mit dem eine erste Person (300) Informationen wahrnimmt, die ein erster Wandler (110) mit einem akustischen Signal (112) bereitstellt, wobei in einer ersten Betriebsart (1) das Signal (112) nur von der ersten Person (300) aber nicht von einer zweiten Person (400) in einem vorgegebenen Mindestabstand (X2) zur ersten Person (300) wahrgenommen werden kann, und in einer zweiten Betriebsart (2) das Signal sowohl von der ersten Person (300) als auch von der zweiten Person (400) wahrgenommen werden kann, das Gerät (100) gekennzeichnet durch einen Sensor (105), der in Bezug auf ein geräte- und personenunabhängiges Bezugssystem (200, 230) zumindest eine Koordinate (230) der räumlichen Ausdehnung (105) des Gerätes (100) auswertet und der Koordinate (230) entsprechend die Betriebsart (1, 2) des Gerätes (100) auswählt.

22. Gerät nach Anspruch 21, bei dem der Sensor (105) in Bezug auf das Erdgravitationsfeld den Winkel (230) zwischen Ausdehnung (105) und Lotlinie (205) ermittelt.

23. Gerät nach Anspruch 21, bei dem der Sensor (105) in Bezug auf das Erdgravitationsfeld die erste Betriebsart auswählt, wenn mit einem vorgegebenen Toleranzbereich ein erster Winkel (230) zwischen Ausdehnung (105) und Lotlinie (205) im wesentlichen einem zweiten Winkel (330) einer Linie zwischen Ohr (310) und Mund (320) der ersten Person (300) entspricht.

24. Tragbares Kommunikationsgerät (100) mit elektroakustischem Wandler (110) zum Aussenden von Informationen an eine erste Person (300), das Kommunikationsgerät (100) umschaltbar von

   (i) einer ersten Betriebsart, bei der der Wandler (110) die Informationen mit einem solchen Schallpegel (PW1) aussendet, daß die Information die erste Person (300) mit einem Schallpegel (PA1) an oder oberhalb der Hörschwelle erreicht (PA1 $\geq$ PS) und eine zweite Person (400) nur mit einem Schallpegel (PB1) unterhalb der Hörschwelle (PB1 < PS) erreichen kann, zu

   (ii) einer zweiten Betriebsart, bei der der Wandler (110) die Information, mit einem solchen Schallpegel (PW2) aussendet, daß die Information die erste Person (300) mit einem Schallpegel (PA2) an oder oberhalb der Hörschwelle (PA2 $\geq$ PS) erreicht und die zweite Person (400) auch mit einem Schallpegel (PB2) an oder oberhalb der Hörschwelle (PB2 $\geq$ PS) erreichen kann,

das Kommunikationsgerät (100) gekennzeichnet durch einen Lagesensor (130), der das Kommunikationsgerät (100) in die erste Betriebsart schaltet, wenn sich das Kommunikationsgerät (100) hinsichtlich eines vom Kommunikationsgerät (100) unabhängigen Bezugssystems (200) in einer solchen Lage ( $(\beta - \gamma) \leq \alpha \leq (\beta + \gamma)$ ) befindet, die der entspricht, mit der die erste Person (300) das Kommunikationsgerät (100) am Ohr (310) halten würde ($\beta \pm \gamma$), oder andernfalls in die zweite Betriebsart schaltet.

*FIG. 1*

FIG. 2